Europäisches Patentamt

European Patent Office

Office européen des brevets

(19)

(11) Veröffentlichungsnummer: **0 041 157**
**B1**

(12) **EUROPÄISCHE PATENTSCHRIFT**

(45) Veröffentlichungstag der Patentschrift:
**20.03.85**

(51) Int. Cl.⁴: **C 08 F 10/00**, C 08 F 4/64

(21) Anmeldenummer: **81103643.3**

(22) Anmeldetag: **12.05.81**

(54) Verfahren zur Homo- und Mischpolymerisation von alpha-Olefinen.

(30) Priorität: **29.05.80 DE 3020316**

(43) Veröffentlichungstag der Anmeldung:
**09.12.81 Patentblatt 81/49**

(45) Bekanntmachung des Hinweises auf die Patenterteilung:
**20.03.85 Patentblatt 85/12**

(84) Benannte Vertragsstaaten:
**BE FR GB IT NL**

(56) Entgegenhaltungen:
**FR - A - 1 290 438**

(73) Patentinhaber: **Ruhrchemie Aktiengesellschaft,
Bruchstrasse 219, D-4200 Oberhausen 13 (DE)**

(72) Erfinder: **Bahadir, Müfit, Dr. Dipl.-Chem.,
Hans-Böckler-Strasse 12, D-4220 Dinslaken (DE)**
Erfinder: **Payer, Wolfgang, Dr. Dipl.-Chem.,
Zedernweg 58, D-4230 Wesel 1 (DE)**

(74) Vertreter: **Reichelt, Karl-Heinz, Dr. et al, m. Br.
Ruhrchemie Aktiengesellschaft Abt. PLD
Postfach 13 01 60, D-4200 Oberhausen 13 (DE)**

EP 0 041 157 B1

## Beschreibung

Die vorliegende Erfindung betrifft ein Verfahren zur Herstellung von Homo- und Mischpolymerisaten von α-Olefinen mit Katalysatorsystemen, die mikrokristalline Ti(III)-Verbindungen enthalten.

Die Polymerisation von α-Olefinen zu den entsprechenden Homo- und Mischpolymerisaten unter Verwendung von Ziegler-Natta-Katalysatoren findet zur Herstellung von Kunststoffen mit unterschiedlichen technisch erwünschten Eigenschaften in grossem Umfange Anwendung. Die Ziegler-Natta-Katalysatoren bestehen im allgemeinen aus einer Titan(III)-Verbindung – sie kann sowohl als reine Verbindung, wie auch in Form von Mischkristallen mit einer Aluminiumverbindung vorliegen – und einem Aktivator. Üblicherweise werden derartige Katalysatorsysteme dadurch hergestellt, dass zunächst eine Titan(IV)-Verbindung mittels aluminiumorganischer oder magnesiumorganischer Verbindungen zu einer Titan(III)-Verbindung reduziert wird. Als Reduktionsmittel können beispielsweise Magnesiummetall, Grignardverbindungen oder Magnesiumdialkyle bzw. Gemische derselben oder Aluminiummetall, Trialkylaluminiumverbindungen oder Alkylaluminiumchloride bzw. Gemische derselben eingesetzt werden. Nach Entfernen der gelösten Reduktionsmittel durch Waschung wird anschliessend der Ti(III)-Verbindung als Aktivator eine aluminiumorganische Verbindung der vorgenannten Art zugesetzt.

Folgt man dieser allgemeinen Arbeitsweise, so wird die Titan(III)-Verbindung stets in verhältnismässig grossen Teilchen mit einem Durchmesser oberhalb von 20 Mikron erhalten. In bestimmten Fällen ist es jedoch zweckmässig, die Titankomponente des Katalysatorsystems möglichst feinteilig einzusetzen, da ihre geringere Korngrösse die Aktivität des Katalysators steigert und die Teilchengrösse der mit seiner Hilfe erzeugten Polymerisate verringert. Eine geringere Teilchengrösse des Polymerisates ist im Hinblick auf die Weiterverarbeitung des Kunststoffes von Bedeutung. Dies gilt insbesondere für ultrahochmolekulare Polyolefine, d.h. solche mit einem viskosimetrisch gemessenen Molekulargewicht oberhalb 500 000 und insbesondere 1 000 000. Derartige Polyolefine lassen sich nicht mit Hilfe der üblicherweise bei Thermoplasten angewandten Arbeitstechniken wie Extrusion oder Spritzgiessen in Formkörper überführen. Ihre Weiterverarbeitung erfolgt daher vorzugsweise durch Pressen und Sintern. Um hierbei sicherzustellen, dass Additive wie Farbstoffe, Antioxidantien und UV-Stabilisatoren im Halbzeug und in den Fertigteilen homogen verteilt sind, ist es erforderlich, die ultrahochmolekularen Polyolefine in besonders feinteiliger Form einzusetzen.

Es hat daher nicht an Versuchen gefehlt, Katalysatoren mit einer geringen Teilchengrösse herzustellen. So beschreibt die US-PS 2 968 652 ein Verfahren zur Verkleinerung der Titan(III)-Verbindungen, einer Kristallgrösse von ca. 25 Mikron auf eine Teilchengrösse von ungefähr 0,1 bis 5 Mikron durch Behandlung des Kristallisats mit Ultraschall in einem indifferenten flüssigen Medium. Die so erhaltenen feinteiligen Partikel sollen im Verhältnis zu gröberen Katalysatoren innerhalb kurzer Zeit höhere Ausbeuten an kristallinen Polymerisaten liefern. Allerdings ist die Korngrösse der mit diesen Katalysatoren hergestellten Polymerisate noch nicht hinreichend gering, so dass die Produkte noch einer nachträglichen Zerkleinerung unterzogen werden müssen. Wegen des grossen apparativen Aufwandes ist diese Arbeitsweise für eine technische Durchführung nicht geeignet.

Ein anderes Verfahren ist in der DE-PS 1 595 661 beschrieben. Hierbei wird zur Herstellung von feinkörnigen Polymerisaten ein TiCl₃ als Katalysatorkomponente verwendet, die in Gegenwart eines aktive Sauerstoffatome enthaltenden, gummiartigen Kohlenwasserstoffpolymerisates gewonnen worden ist, das 0,1 bis 1,0 Gew.-% Sauerstoff enthält und im eingesetzten Lösungsmittel in einer Menge von 0,01 bis 1 Teil pro Gewichtsteil Titantetrachlorid gelöst ist. Empfohlen werden alle bekannten gummiartigen Kohlenwasserstoffpolymerisate, Homopolymerisate oder Mischpolymerisate, wie Polyisobutylen, Ethylen-Propylen-Mischpolymerisat, Polyisopren, Polybutadien, Ethylen-Propylen-Dicyclopentadien-Terpolymere und Styrol-Butadien-Polymerisat, die durch Einwirkung von Sauerstoff oxidiert worden sind. Die Oxidation solcher Polymerisate kann z.B. durch kurzes Mahlen bei erhöhter Temperatur in einer Sauerstoffatmosphäre oder durch längeres Lagern an der Luft erfolgen.

Nachdem die Reduktion des Titantetrachlorids in Gegenwart des Kohlenwasserstoffpolymerisats bei Temperaturen nicht über 0 °C durchgeführt worden ist, wird die Suspension anschliessend 4 Stunden auf 95 °C erhitzt und die Titan(III)-Katalysator-Komponente mit frischem Lösungsmittel ausgewaschen.

Die Anwendung des gummiartigen, aktive Sauerstoffatome enthaltenden Kohlenwasserstoffpolymerisates bewirkt, dass ein feinkristalliner Katalysator gebildet wird. Die Herstellung der Kohlenwasserstoffpolymerisate stösst in der Praxis jedoch auf Schwierigkeiten. Die Aufnahme von Sauerstoff erfolgt über die Oberfläche des Polymerisats und lässt sich wegen der hohen Zähigkeit des Produktes nur schwer reproduzierbar steuern, so dass eine homogene Vermischung, Verteilung des Sauerstoffs im Polymerisat, nicht gewährleistet ist. Gleiches gilt für die analytische Kontrolle. Hierbei ist eine repräsentative Probenahme, die eine Bestimmung des Sauerstoffgehalts des Kohlenwasserstoffpolymerisats in Abhängigkeit von Dauer der Reaktion und Höhe der Temperatur ermöglichen soll, nur eingeschränkt möglich. Nicht zu übersehen ist in diesem Zusammenhang, dass die Aktivität des Katalysators durch die Anwesenheit sauerstoffhaltiger Verbindungen beeinträchtigt wird.

Es bestand daher die Aufgabe, ein Verfahren zur Herstellung feinteiliger Polymerisate bereitzustellen, das die beschriebenen Nachteile vermeidet.

Überraschenderweise erhält man feinkörnige Polymerisate durch ein Verfahren zur Homo- und Mischpolymerisation von α-Olefinen mittels eines Katalysatorsystems, das aus mikrokristallinen Titan(III)-Verbindungen, die durch Reduktion von Titan(IV)-Verbindungen mit aluminiumorganischen oder magnesiumorganischen Verbindungen in einem indifferenten, die beiden Reaktionspartner lösenden organischen Lösungsmittel hergestellt werden und einer aluminiumorganischen Verbindung als Aktivator besteht. Entsprechend der neuen Arbeitsweise wird die Reduktion der Titan(IV)-Verbindungen in Gegenwart von 0,2 bis 5 Gew.-% ataktischer Poly-α-Olefine, bezogen auf das Lösungsmittel, durchgeführt und das ataktische Poly-α-Olefin nach erfolgter Reduktion von Ti(III)-Verbindung abgetrennt.

Unter ataktischen Poly-α-olefinen versteht man Makromoleküle, deren Seitenketten regellos angeordnet sind. Im Falle von Poly-α-hexen besteht die Seitenkette z.B. in einer Butylgruppe. Als ataktische Poly-α-Olefine werden nach einer bevorzugten Ausführungsform der Erfindung Poly-α-buten, Poly-α-hexen, Poly-α-octen, Poly-α-decen und Poly-α-dodecen eingesetzt.

Zur Herstellung der Titan(III)-Komponente des erfindungsgemässen Katalysatorsystems sind die verschiedensten Titan(IV)-Verbindungen geeignet: Titantetrahalogenide wie $TiCl_4$, $TiBr_4$ und $TiJ_4$, Titanester der Formel $Ti(OR)_4$, gemischte Halogentitanester wie $Ti(OR)_3Cl$, $Ti(OR)_3Br$, $Ti(OR)_2Cl_2$, $Ti(OR)_2Br_2$, $Ti(OR)_2J_2$, $Ti(OR)Cl_3$, $Ti(OR)Br_3$, wobei R für aliphatische und/oder aromatische Kohlenwasserstoffreste steht.

Als aluminiumorganische Verbindungen für die Reduktion der Titan(IV)-Verbindungen können eingesetzt werden: Aluminiumtrialkylverbindungen wie $Al(C_2H_5)_3$, $Al(C_3H_7)_3$, $Al(n-C_4H_9U_3$, Isoprenylaluminium, Alkylaluminiumhalogenide wie $Al(C_2H_5)_2Cl$, $Al(C_2H_5)Cl_2$, $Al(C_3H_7)_2Cl$, $Al(C_3H_7)Cl_2$, $Al(n-C_4H_9)_2Cl$, $Al(n-C_4H_9)Cl_2$ sowie Gemische unterschiedlicher Al-Verbindungen der vorgenannten Art. Für die Reduktion können auch magnesiumorganische Verbindungen wie Grignard-Verbindungen oder Magnesiumdialkyle bzw. Gemische derselben verwendet werden.

Als Aktivatoren für das Katalysatorsystem, das aus Titan(III)-Verbindungen besteht, kommen die für die Reduktion der Titan(IV)-Verbindungen verwendeten Al-Verbindungen in Betracht.

Die Herstellung des Katalysatorsystems kann in jedem indifferenten flüssigen Lösungsmittel vorgenommen werden, in dem sowohl die Titan(IV)-Verbindungen, die organischen Aluminiumverbindungen und die ataktischen Poly-α-Olefine gemeinsam löslich sind. Derartige Lösungsmittel sind gesättigte, aliphatische Kohlenwasserstoffe, wie Hexan, Heptan, $C_8$–$C_{12}$-Kohlenwasserstofffraktionen, cycloaliphatische Kohlenwasserstoffe, halogenierte Kohlenwasserstoffe aus der Reihe der aliphatischen oder aromatischen Verbindungen oder unterschiedliche Gemische der aufgeführten Lösungsmittel.

Das erfindungsgemässe Verfahren kann beispielsweise wie folgt durchgeführt werden: Man stellt zunächst durch Polymerisation von α-Olefinen mittels Titan(III)-Verbindungen und in Gegenwart einer aluminiumorganischen Verbindung als Aktivator bei Temperaturen von 30 bis 120 °C und Drücken von 2 bis 100 bar das gewünschte ataktische Poly-α-Olefin her. Das Fertigprodukt kann anschliessend durch Lösungsmittelzusatz auf eine gewünschte Konzentration eingestellt werden.

Die Herstellung des Katalysatorsystems erfolgt durch Reduktion von Titan(IV)-Verbindungen in Gegenwart der rechnerisch ermittelten Menge an ataktischem Poly-α-Olefin mittels aluminiumorganischer Verbindungen. Nach Beendigung der Reduktion wird die Katalysatorkomponente mit Lösungsmitteln bei Raumtemperatur ausgewaschen und anschliessend durch Zusatz aluminiumorganischer Verbindungen aktiviert. Hierbei wendet man je Mol Ti(III)-Verbindung 1 bis 100 Mol aluminiumorganische Verbindungen an.

Der so hergestellte Katalysator kann dann unmittelbar für die Homo- und Mischpolymerisation von α-Olefinen eingesetzt werden, z.B. von Äthylen, Propylen, Buten-(1), Hexen-(1), Octen-(1), Decen-(1) und Dodecen-(1). Die Polymerisation erfolgt unter den, für das Ziegler-Natta-Verfahren typischen Bedingungen, d.h. bei 80 °C und 4 bar. Das anfallende Polymerisat zeichnet sich durch eine feine Kornverteilung, wie sie für die nachfolgende Weiterverarbeitung erwünscht ist, aus.

1. Herstellung von ataktischen Poly-α-Olefinen

1a) Poly-α-Hexen

In einem mit Stickstoff gespültem 2-I-Reaktionskolben mit Mantelheizung werden zu einer auf 40 °C erwärmten Lösung von 4,0 mol Hexen (rund 332 g) in 500 ml einer Kohlenwasserstofffraktion (Kp 140 bis 170 °C) 1,6 mmol $TiCl_3$ und 16 mmol Isoprenylaluminium gegeben. Zur Polymerisation wird das Reaktionsgemisch unter ständiger Rührung 6 Stunden auf 40 °C und weitere 16 Stunden auf Raumtemperatur gehalten. Der Umsetzungsgrad beträgt 97,4% der Theorie (Bestimmung über die Jod-Zahl). Anschliessend wird das Reaktionsgemisch durch Lösungsmittelzusatz auf eine Konzentration von 12 Gew.-% eingestellt. Die kinematische Viskosität (gemessen mit dem Ubbe-Iohde-Viskosimeter; DIN 51 562) beträgt $v_{20} = 4.100$ cSt.

1b) Poly-α-Octen

Die Herstellung von Poly-α-Octen erfolgt analog der Herstellung von Poly-α-Hexen gemäss Beispiel 1a. Der Umsetzungsgrad beträgt 96,3% der Theorie (Bestimmung über die Jod-Zahl). Anschliessend wird das Reaktionsgemisch durch Lösungsmittelzusatz auf eine Konzentration von 12 Gew.-% eingestellt. Die kinematische Viskosität beträgt $v_{20} = 3.900$ cSt.

1c) Poly-α-Decen

Die Herstellung von Poly-α-Decen erfolgt analog der Herstellung von Poly-α-Hexen gemäss Beispiel 1a. Der Umsetzungsgrad beträgt 91,8% der Theorie (Bestimmung über die Jod-Zahl). Das anfallende Reaktionsgemisch wird anschliessend durch Lösungsmittelzusatz auf eine Konzentration von 12 Gew.-% verdünnt. Die kinematische Viskosität beträgt $v_{20}$ = 3.800 cSt.

1d) Poly-α-Dodecen

Die Herstellung von Poly-α-Dodecen erfolgt analog der Herstellung von Poly-α-Hexen gemäss Beispiel 1a. Der Umsetzungsgrad beträgt 90,5% der Theorie (Bestimmung über die Jod-Zahl). Das anfallende Reaktionsgemisch wird anschliessend durch Lösungsmittelzusatz auf eine Konzentration von 12 Gew.-% eingestellt. Die kinematische Viskosität beträgt $v_{20}$ = 3.800 cSt.

2. Herstellung des Katalysators
2a) Vergleichsbeispiel

In einem trockenen, mit Stickstoff gespülten Dreihalskolben werden 755 mmol Diethylaluminiumchlorid (DEAC) bei Raumtemperatur in 1.250 ml Hexan gelöst. Innerhalb von 4 Stunden tropft man unter Rühren bei Raumtemperatur (20–25 °C) 395 mmol $TiCl_4$ gelöst in Hexan ($TiCl_4$-gehalt: 27 Gew.-%) zu. Nach Abschluss der Zugabe wird die Suspension der Titan(III)-Verbindung weitere 8 Stunden unter N$_2$ bei Raumtemperatur gerührt und anschliessend nicht umgesetztes, gelöstes DEAC durch Dekantieren und mehrmaliges Waschen mittels Hexan entfernt.

Korngrösse der Titan(III)-Verbindung: > 25 μ (gemessen durch mikroskopische Ausmessung)

Vor Einsatz in die Polymerisationsstufe wird die Suspension mittels Hexanzusatz auf eine Konzentration von 0,6 mmol Ti/Liter eingestellt und mit DEAC im 10fachen molaren Überschuss (bezogen auf Titan) aktiviert.

2b) Herstellung der Ti(III)-Katalysatorkomponente unter Zusatz von ataktischem
     Poly-α-hexen

In einem trockenen, mit Stickstoff gespülten Dreihalskolben werden 755 mmol DEAC bei Raumtemperatur in 1.250 ml Hexan, das 6,84 g ataktisches Poly-α-hexen (nach Beispiel 1a) enthält, gelöst. Anschliessend wird, wie in Beispiel 2a beschrieben, $TiCl_4$ zugesetzt, unter N$_2$ bei Raumtemperatur 8 Stunden gerührt und nicht umgesetztes DEAC durch Dekantieren und mehrmaliges Waschen mit Hexan entfernt.

Korngrösse der Titan(III)-Verbindung: 1–10 μ (gemessen durch mikroskopische Ausmessung)

Vor Einsatz in die Polymerisationsstufe wird analog zu Beispiel 2a verfahren.

2c) Herstellung der Ti(III)-Katalysatorkomponente unter Zusatz von ataktischem
     Poly-α-hexen

In einem trockenen, mit Stickstoff gespülten Dreihalskolben werden 755 mmol DEAC bei Raumtemperatur in 1.250 ml Hexen, das 7,56 g ataktisches Poly-α-hexen (nach Beispiel 1a) enthält, gelöst. Anschliessend wird, wie in Beispiel 2a beschrieben, $TiCl_4$ zugesetzt, unter N$_2$ bei Raumtemperatur 8 Stunden gerührt und nicht umgesetztes DEAC durch Dekantieren und mehrmaliges Waschen mit Hexan entfernt.

Korngrösse der Titan(III)-Verbindung: 1–10 μ.

Vor Einsatz in die Polymerisationsstufe wird analog Beispiel 2a verfahren.

2d) Herstellung der Ti(III)-Katalysatorkomponente unter Zusatz von ataktischem
     Poly-α-octen

In einem trockenen, mit Stickstoff gespülten Dreihalskolben werden 755 mmol DEAC bei Raumtemperatur in 1.250 ml Hexan, das 7,56 g ataktisches Poly-α-octen (gemäss Beispiel 1b) enthält, gelöst. Anschliessend wird, wie in Beispiel 2a beschrieben, $TiCl_4$ zugesetzt, nach Zugabe des $TiCl_4$ 8 Stunden unter N$_2$ bei Raumtemperatur gerührt und nicht umgesetztes DEAC durch Dekantieren und mehrmaliges Waschen mit Hexan entfernt.

Korngrösse der Titan(III)-Verbindung: 1–10 μ.

Vor Einsatz in die Polymerisationsstufe wird analog Beispiel 2a verfahren.

2e) Herstellung der Ti(III)-Katalysatorkomponente unter Zusatz von ataktischem
     Poly-α-decen

In einem trockenen, mit Stickstoff gespülten Dreihalskolben werden 755 mmol DEAC bei Raumtemperatur in 1.250 ml Hexan, das 7,56 g ataktisches Poly-α-decen (gemäss Beispiel 1c) enthält, gelöst. Anschliessend wird wie in Beispiel 2a beschrieben, $TiCl_4$ zugesetzt, unter N$_2$ bei Raumtemperatur 8 Stunden gerührt und nicht umgesetztes DEAC durch Dekantieren und mehrmaliges Waschen mit Hexan entfernt.

Korngrösse der Titan(III)-Verbindung: 1–10 μ.

Vor Einsatz in die Polymerisationsstufe wird analog Beispiel 2a verfahren.

2f) Herstellung der Ti(III)-Katalysatorkomponente unter Zusatz von ataktischem
     Poly-α-dodecen

In einem trockenen, mit Stickstoff gespülten Dreihalskolben werden 755 mmol DEAC bei Raumtemperatur in 1.250 ml Hexan, das 7,56 g ataktisches Poly-α-dodecen (gemäss Beispiel 1d) enthält, gelöst. Anschliessend wird wie in Beispiel 2a beschrieben, $TiCl_4$ zugesetzt, unter N$_2$ bei Raumtemperatur 8 Stunden gerührt und nicht umgesetztes DEAC durch Dekantieren und mehrmaliges Waschen mit Hexan entfernt.

Korngrösse der Titan(III)-Verbindung: 1–10 μ.

Vor Einsatz in die Polymerisationsstufe wird analog Beispiel 2a verfahren.

3. Diskontinuierlich durchgeführte Polymerisation
3a) Vergleichsversuch

Katalysatorherstellung ohne Zusatz eines ataktischen Poly-α-Olefins gemäss Beispiel 2a, Aktivierung unter Verwendung von DEAC im 10fachen molaren Überschuss (bezogen auf Titan).

Der gemäss Beispiel 2a hergestellte Katalysator wird in einer Menge von 0,5 mmol (bezogen auf Titan) zusammen mit 2 l einer Kohlenwasserstofffraktion (kp 140–170 °C) in einem trockenen, mit Stickstoff gespülten 3 l Druckreaktor mit Mantelheizung unter Rühren auf 80 °C aufgeheizt. Anschliessend wird Ethylen bis zu einem Gesamtdruck von 4 bar aufgepresst und dieser Druck während der 5stündigen Reaktionsdauer durch Zugabe von Ethylen aufrechterhalten. Durch Zugabe von Isopropanol wird die Polymerisation abgebrochen.

Katalysatorbedarf: 1,1 mmol Ti/kg Polyethylen.

3b) Polymerisation unter Verwendung eines Katalysators, der in Gegenwart von ataktischem Poly-α-hexen hergestellt wird

3b[1]) Katalysator aus Beispiel 2b
Versuchsdurchführung analog 3a
Katalysatorbedarf: 1,0 mmol Ti/kg Polyethylen

3b[2] Katalysator aus Beispiel 2c
Versuchsdurchführung analog 3a
Katalysatorbedarf: 0,9 mmol Ti/kg Polyethylen

3c) Polymerisation unter Verwendung eines Katalysators, der in Gegenwart von ataktischem Poly-α-octen hergestellt wird
Katalysator aus Beispiel 2d
Versuchsdurchführung analog Beispiel 3a
Katalysatorbedarf: 1,5 mmol Ti/kg Polyethylen

3d) Polymerisation unter Verwendung eines Katalysators, der in Gegenwart von ataktischem Poly-α-decen hergestellt wird
Katalysator aus Beispiel 2e
Versuchsdurchführung analog Beispiel 3a
Katalysatorbedarf: 1,6 mmol Ti/kg Polyethylen

3e) Polymerisation unter Verwendung eines Katalysators, der in Gegenwart von ataktischem Poly-α-dodecen hergestellt wird
Katalysator aus Beispiel 2f
Versuchsdurchführung analog Beispiel 3a
Katalsatorbedarf: 1,0 mmol Ti/kg Polyethylen

Die Versuchsergebnisse sind in der folgenden Tabelle 1 zusammengestellt.

Tabelle 1

| Beispiel | eingesetztes Poly-α-Olefin | Siebanalyse (mm/∅) in Gew.-% (DIN 4188) | | | | | |
|---|---|---|---|---|---|---|---|
| | | >1,0 | >0,5 | >0,25 | >0,1 | >0,63 | <0,63 |
| 3a | – | 0,5 | 0,5 | 10,5 | 86,5 | 2,0 | Spur |
| 3b[1] | Poly-α-hexen | Spur | 1,5 | 2,0 | 31,0 | 62,0 | 3,5 |
| 3b[2] | Poly-α-hexen | 0,5 | 0,5 | 1,5 | 22,5 | 57,0 | 18,0 |
| 3c | Poly-α-octen | Spur | 0,5 | 0,5 | 24,0 | 40,5 | 34,5 |
| 3d | Poly-α-decen | 0,5 | 0,5 | 0,5 | 11,0 | 39,0 | 48,5 |
| 3e | Poly-α-dodecen | 0,5 | 0,5 | 0,5 | 6,0 | 38,5 | 54,0 |

[1] = Einzelkerbe
[2] = Doppelkerbe

4. Kontinuierlich durchgeführte Polymerisation
4a) Vergleichsversuch
In einem mit Hexan gefüllten 47 l Doppelmantel-Druckreaktor werden bei 80 °C und 4 bar Gesamtdruck kontinuierlich 940 l Ethylen, 0,8–1,0 l Wasserstoff und 1,2 l Kontaktlösung, die gemäss Beispiel 2a hergestellt werden, eindosiert.
Katalysatorbedarf: 0,8 mmol Ti/kg Polyethylen.

4b) Polymerisation unter Verwendung eines Katalysators, der in Gegenwart von ataktischem Poly-α-hexen hergestellt wird

4b[1]) Katalysator aus Beispiel 2b
Versuchsdurchführung analog Beispiel 4a
Katalysatorbedarf: 0,9 mmol Ti/kg Polyethylen

4b[2]) Katalysator aus Beispiel 2c
Versuchsdurchführung analog Beispiel 4a
Katalysatorbedarf: 0,5 mmol Ti/kg Polyethylen

Die Versuchsergebnisse sind in der folgenden Tabelle 2 zusammengestellt.

Tabelle 2

| Beispiel | eingesetztes Poly-α-Olefin | Siebanalyse (mm/∅) in Gew.-% (DIN 4188) | | | | | | RSV-Wert (dl/g) (Iso/R 1191) | ZST-Wert N/mm² (DIN 53493) | Kerbschlag-zähigkeit mJ/mm² (DIN 53453) | Schüttdichte (g/l) (DIN 53468) |
|---|---|---|---|---|---|---|---|---|---|---|---|
| | | >1,0 | >0,5 | >0,25 | >0,1 | >0,63 | <0,63 | | | | |
| 4a | – | 2,0 | 2,5 | 41,5 | 53,5 | 0,5 | 0 | 23,8 | 0,27 | 1) 152 2) 211 | 455 |
| 4b¹ | Poly-α-hexen | 1,5 | 2,5 | 3,0 | 59,0 | 30,0 | 4,0 | 23,3 | 0,28 | 1) 159 2) 209 | 450 |
| 4b² | Poly-α-hexen | 1,5 | 3,0 | 2,5 | 71,0 | 20,5 | 1,5 | 22,4 | 0,24 | 1) 172 2) 258 | 320 |

1 = Einzelkerbe
2 = Doppelkerbe

**Patentansprüche**

1. Verfahren zur Homo- und Mischpolymerisation von α-Olefinen bei 30–120 °C und 2 bis 100 bar mittels eines Katalysatorsystems, das aus mikrokristallinen Titan(III)-Verbindungen, die durch Reduktion von Titan(IV)-Verbindungen mit aluminiumorganischen oder magnesiumorganischen Verbindungen in einem indifferenten, die beiden Reaktionspartner lösenden organischen Lösungsmittel hergestellt werden, und einer aluminiumorganischen Verbindung als Aktivator besteht, dadurch gekennzeichnet, dass man die Reduktion der Titan(IV)-Verbindungen in Gegenwart von 0,2 bis 5 Gew.-% ataktischer Poly-α-Olefine, bezogen auf das Lösungsmittel, durchführt und das ataktische Poly-α-olefin nach erfolgter Reduktion von der Ti(III)-Verbindung abtrennt.

2. Verfahren nach Anspruch 1, dadurch gekennzeichnet, dass als ataktische Poly-α-Olefine, Poly-α-Buten, Poly-α-hexen, Poly-α-octen, Poly-α-decen und Poly-α-dodecen eingesetzt werden.

**Claims**

1. Process for the homo- or copolymerisation of α-olefins at 30–120 °C and 2–100 bar using a catalyst system which consists of microcrystalline titanium(III)-compounds, prepared by reduction of titanium(IV)compounds with organoaluminium or organomagnesium compounds in an indifferent solvent in which both reaction partners are soluble, and an organoaluminium compound as activator, characterised in that the reduction of the titanium(IV)compounds is carried out in the presence of 0.2 to 5% by weight based on the solvent of atactic poly-α-olefins and that the atactic poly-α-olefin is separated off from the titanium(III)-compound after completion of the reduction.

2. Process according to claim 1, characterised in that poly-α-butene, poly-α-hexene, poly-α-octene, poly-α-decene and poly-α-dodecene are used as the atactic poly-α-olefins.

**Revendications**

1. Procédé pour l'homo- et la copolymérisation d'α-oléfines à 30–120 °C et sous 2 à 100 bars au moyen d'un système catalytique qui consiste en composés microcristallins de titane (III), qui sont fabriqués par réduction de composés de titane (IV) par des composés organiques d'aluminium ou de magnésium dans un solvant organique indifférent, dissolvant les deux partenaires de réaction, et d'un composé organique d'aluminium comme activeur, caractérisé en ce que l'on effectue la réduction des composés de titane (IV) en présence de 0,2 à 5% en poids de poly-α-oléfines atactiques, par rapport au solvant, et on sépare la poly-α-oléfine atactique du composé de Ti(III) après la réduction.

2. Procédé selon la revendication 1, caractérisé en ce que l'on utilise comme poly-α-oléfines atactiques le poly-α-butène, le poly-α-hexène, le poly-α-octène, le poly-α-décène et le poly-α-dodécène.